# EUROPÄISCHE PATENTSCHRIFT

(11) **EP 3 423 752 B1**
(45) Veröffentlichungstag und Bekanntmachung des Hinweises auf die Patenterteilung: **01.04.2020**
(21) Anmeldenummer: 17707820.1
(22) Anmeldetag: 27.02.2017
(51) Int. Cl.: F23R 3/00, F23M 5/00

(54) **STRÖMUNGSELEMENT UND VERFAHREN ZUM BESCHICHTEN EINES STRÖMUNGSELEMENTS**
FLOW ELEMENT AND METHOD FOR COATING A FLOW ELEMENT
ÉLÉMENT EXPOSÉ À UN ÉCOULEMENT ET PROCÉDÉ DE REVÊTEMENT D'UN ÉLÉMENT EXPOSÉ À UN ÉCOULEMENT

(30) Priorität: 01.03.2016 DE 102016103664
(43) Veröffentlichungstag der Anmeldung: 09.01.2019
(73) Patentinhaber: Lufthansa Technik AG, 22335 Hamburg (DE)
(72) Erfinder: PETERS, Jan Oke, 22339 Hamburg (DE); GARTNER, Thomas, 22087 Hamburg (DE); WINTER, Oliver, 22119 Hamburg (DE); KUNTZAGK, Stefan, 22459 Hamburg (DE); LÜBCKE, Tim, 22083 Hamburg (DE)
(74) Vertreter: Müller Verweyen
(86) Internationale Anmeldenummer: PCT/EP2017/054459
(87) Internationale Veröffentlichungsnummer: WO 2017/148843

(56) Entgegenhaltungen:
- EP-A2- 2 641 993

## Beschreibung

Die vorliegende Erfindung betrifft ein Strömungselement für den strömungstechnischen Kontakt mit einem heißen Gasstrom innerhalb eines Flugtriebwerks gemäß dem Oberbegriff des unabhängigen Anspruchs 1 sowie ein korrespondierendes Verfahren zum Beschichten eines Strömungselements für ein Flugtriebwerk gemäß dem Oberbegriff des unabhängigen Anspruchs 5.

Die aus dem Stand der Technik bekannten Strömungselemente in Form von Brennkammerkachelelementen bestehen aus dem Grundwerkstoff, der zur Verlängerung der Betriebszeit durch eine oder mehrere Beschichtungen geschützt ist. Der Grundwerkstoff des Brennkammerkachelelements muss im Betrieb insbesondere vor einer zu hohen Temperatur geschützt werden, weshalb die Beschichtungen vorzugsweise zur thermischen Isolierung dienen. Eine Brennkammer ist üblicherweise zweischalig aufgebaut. Sie besteht aus einem Blechgehäuse, an dessen Innenseite die Brennkammerkachelelemente verschraubt sind, die so einen geschlossenen Brennraum bilden. Die Brennkammerkachelelemente besitzen an der dem Blechgehäuse zugewandten Fläche, die auch Rückseite genannt wird, eine Vielzahl kleiner Stifte zur Vergrößerung der Oberfläche. Zwischen dem Blechgehäuse und dem Brennkammerkachelelement strömt ein Kühlluftmassenstrom, der an der Rückseite des Brennkammerkachelelements angebrachte Stifte umströmt und so das Brennkammerkachelelement kühlt. Unmittelbar an die Rückseite angrenzende Flächen des Brennkammerkachelelements werden Randflächen genannt. Die in Strömungsrichtung des Brennstoffgemisches zeigende Randfläche wird als Austrittskante bezeichnet. Die Rückseite und die Randflächen werden typischerweise von einer aluminiumbasierten Alitierungs-Diffusionsbeschichtung geschützt. Eine dem eigentlichen Verbrennungsraum zugewandte Fläche des Brennkammerkachelelements wird durch eine APS (atmosphärisches Plasmaspritzen) Wärmedämmschicht vor den hohen thermischen Belastungen geschützt. Die APS Wärmedämmschicht besteht üblicherweise aus einer Haftschicht (MCrAlY) und einer Keramik aus Zirkonoxid (ZrO₂).

Bei den beschriebenen Brennkammerkachelelementen treten insbesondere zwei Schadensmechanismen auf, die eine Verringerung deren Lebensdauer zur Folge haben. Bei einem ersten Schadensmechanismus handelt es sich um die Korrosion der Austrittskante des Brennkammerkachelelements, die durch Wärmespannungen hervorgerufen wird. Bei einem zweiten Schadensmechanismus platzt durch lokale Temperaturspitzen an der dem Brennraum zugewandten Fläche die APS Wärmedämmschicht ab, wodurch es zum flächigen Abbrand des Grundwerkstoffs kommt.

Zur Lösung dieser Probleme werden heute teilweise Grundwerkstoffe aus Einkristallen verwendet. Der Nachteil dieser Lösung besteht in dem hohen Aufwand zur Herstellung der Einkristalle und den damit verbundenen hohen Herstellungskosten.

EP 2 641 993 A2 beschreibt ein Strömungselement gemäß dem Oberbegriff des Anspruchs 1.

Aufgabe der vorliegenden Erfindung ist es, ein Strömungselement und ein Verfahren für dessen Beschichtung bereitzustellen, wodurch die Heißgaskorrosionsbeständigkeit bei geringeren Beschichtungskosten verbessert wird.

Die Aufgabe wird durch die Merkmale der unabhängigen Ansprüche gelöst. Weitere bevorzugte Ausführungsformen der Erfindung sind den Unteransprüchen, der Figur und der dazugehörigen Beschreibung zu entnehmen.

Gemäß dem Grundgedanken der Erfindung wird zur Lösung der Aufgabe ein Strömungselement für den strömungstechnischen Kontakt mit einem heißen Gasstrom innerhalb eines Flugtriebwerks vorgeschlagen, wobei das Strömungselement einen Grundwerkstoff umfasst, der eine Heißgasfläche, welche dem Gasstrom zugewandt ist, und eine abgewandte Fläche, welche dem Gasstrom abgewandt ist, aufweist, wobei der Grundwerkstoff an der Heißgasfläche und an der abgewandten Fläche vollständig von einer Chromierungsschicht umgeben ist, wobei das Strömungselement auf der Chromierungsschicht in ersten Teilbereichen eine Haftschicht aufweist, wobei das Strömungselement eine Alitierungsschicht aufweist, wobei die Alitierungsschicht in den ersten Teilbereichen auf der Haftschicht angeordnet ist, wobei in den ersten Teilbereichen eine Wärmedämmschicht auf der Alitierungsschicht angeordnet ist, und die Alitierungsschicht in zweiten Teilbereichen, welche keine Haftschicht aufweisen, auf der Chromierungsschicht angeordnet ist, wobei die Chromierungsschicht und die Alitierungsschicht in den zweiten Teilbereichen eine Chromierungs-Alitierungsschicht bilden.

Vorzugsweise ist das Strömungselement quaderförmig ausgeführt, so dass die Heißgasfläche vorzugsweise durch eine erste Seitenfläche des Quaders gebildet ist, die im montierten Zustand dem Gasstrom zugewandt ist. Die abgewandte Fläche wird dann vorzugsweise durch die übrigen fünf Seitenflächen des Quaders gebildet. Zu dem Offenbarungsgehalt dieser Anmeldung sind jedoch ausdrücklich auch Strömungselemente hinzuzuzählen, die eine von der Quaderform abweichende Geometrie aufweisen. Vorzugsweise wird das Strömungselement durch ein Brennkammerelement einer Brennkammer einer Gasturbine gebildet, weiter vorzugsweise durch ein Brennkammerkachelelement.

Die Beschichtung hat zum Ziel, den Al-Gehalt möglichst gering einzustellen und damit den Widerstand gegen Thermo-Mechanical Fatigue (TMF) induzierte Rissbildung zu erhöhen. Zusätzlich wird durch die erfindungsgemäße Beschichtung der Cr-Gehalt im Randbereich des Grundwerkstoffs erhöht, wodurch der Widerstand gegen sulfatinduzierte Korrosion erhöht wird. Durch diese Anpassung des Al- und Cr-Gehalts kann die Lebensdauer des Strömungselements erhöht werden. Dies hat eine erhöhte Systemzuverlässigkeit und reduzierte Instandhaltungskosten zur Folge. Die Chromierungsschicht bzw. Chromierungs-Alitierungsschicht weist vorzugsweise einen Cr-Gehalt von maximal 40 Gew.-% auf, weiter vorzugsweise maximal 35 Gew.-%, insbesondere vorzugsweise maximal 30 Gew.-%. Die Untergrenze für den Cr-Gehalt liegt vorzugsweise bei mindestens 10 Gew.-%, weiter vorzugsweise bei mindestens 20 Gew.-%, insbesondere vorzugsweise bei mindestens 30 Gew.-%.

Die Chromierungsschicht wird vorzugsweise durch die chemische Gasphasenabscheidung (Chemical Vapour Deposition - CVD) aufgebracht. Vorzugsweise diffundiert das Chrom dabei 150 *µ*m in den Grundwerkstoff, weiter vorzugsweise ca. 100 *µ*m. Bei der Chromierungs-Alitierungsschicht wird zusätzlich mit Hilfe der chemischen Gasphasenabscheidung (CVD) Aluminium aufgedampft. Vorzugsweise diffundiert das Aluminium dabei 150 *µ*m in den Grundwerkstoff, weiter vorzugsweise ca. 100 *µ*m.

Die Alitierungsschicht in den ersten Teilbereichen kann auch durch eine Platin-Aluminid-Beschichtung gebildet sein, durch welche eine höhere Beständigkeit gegen Oxidation erreicht werden kann.

Das Platin wird dann vorzugsweise galvanisch oder durch PVD auf der Haftschicht aufgebracht, wobei anschließend eine Alitierung erfolgt. Durch das Eindiffundieren des Aluminiums während der Alitierung bildet sich die Platin-Aluminid-Beschichtung. Durch das Alitieren beim Aufbringen der Platin-Aluminid-Beschichtung ist diese als Alitierungsschicht im Sinne des Anspruchs 1 zu verstehen.

Die dem Gasstrom zugewandte Heißgasfläche kann insbesondere durch lokale Temperaturspitzen, die durch sog. Dilutionjets hervorgerufen werden, beschädigt werden. Durch die Anordnung der Chromierungsschicht, der Haftschicht und der Alitierungsschicht zwischen dem Grundwerkstoff und der Wärmedämmschicht wird eine besonders hitzeresistente Schutzschicht gebildet.

Die zwischen der Chromierungsschicht und der Alitierungsschicht angeordnete Haftschicht ist vorzugsweise durch MCrAlY gebildet.

Bei der Wärmedämmschicht handelt es sich vorzugsweise um eine keramische Wärmedämmschicht, beispielsweise aus Zirkonoxid (ZrO₂). Alternativ sind aber auch eine oder mehrere Wärmedämmschichten mit anderer chemischer Zusammensetzung möglich.

Die Wärmedämmschicht ist vorzugsweise durch thermisches Spritzen aufgebracht. Die Wärmedämmschicht ist weiter vorzugsweise durch physikalische Gasphasenabscheidung aufgebracht, weiter vorzugsweise durch physikalische Gasphasenabscheidung (Physical Vapour Deposition - PVD) mit Elektronenstrahl (Electron Beam-PVD - EB-PVD).

Bei einem Abplatzen der Wärmedämmschicht käme es ohne die Chromierungsschicht, Haftschicht und Alitierungsschicht zu einem flächigen Abbrand des Grundwerkstoffes. Der besondere Vorteil dieser Ausführungsform liegt somit darin, dass der Grundwerkstoff nach einem Abplatzen der Wärmedämmschicht zusätzlich durch den Verbund von Chromierungsschicht, Haftschicht und Alitierungsschicht geschützt wird.

Es wird weiter vorgeschlagen, dass die ersten Teilbereiche der Heißgasfläche zugeordnet sind. Die erfindungsgemäße Beschichtung der ersten Teilbereiche ist damit dem heißen Gasstrom zugewandt, durch den das Strömungselement stark beansprucht wird. Die hohe thermische Beanspruchung kann damit bestmöglich durch die ersten Teilbereiche von dem Grundelement abgeschirmt werden.

Dementsprechend sind die zweiten Teilbereiche der dem Heißgasstrom abgewandten Fläche zugeordnet. Dadurch ist die Chromierungs-Alitierungsschicht auf einer dem Gasstrom abgewandten Fläche des Grundwerkstoffs vorgesehen, wodurch auch die weniger stark beanspruchten Seitenflächen, die dem Gasstrom abgewandt sind, adäquat geschützt werden.

Eine durch die dem Gasstrom abgewandte Seitenfläche gebildete Austrittskante ist neben der Heißgasfläche ebenfalls besonders hohen Belastungen ausgesetzt. Vorzugsweise handelt es sich bei der Austrittskante um die Kante, die von dem vorbeiströmenden Gasstrom als letztes umströmt wird. Oder anders gesagt: Die Austrittskante bildet in Strömungsrichtung die Hinterkante des Strömungselements.

Aufgrund hoher Wärmespannungen können sich äquidistante, laterale Risse an der Austrittskante bilden. Weiter wird die Austrittskante bei bestimmten Flugbedingungen durch sulfatinduzierte Korrosion angegriffen. Durch die Risse in der Beschichtung wird der Zugang korrosiver Medien zu dem Grundwerkstoff erleichtert, was dazu führt, dass das an der Austrittskante beschädigte Brennkammerkachelelement durch Neumaterial ersetzt werden muss. Durch das Aufbringen der Chromierungs-Alitierungsschicht an der Austrittskante des Strömungselements kann dieser Schadensmechanismus zuverlässig verhindert werden.

Es wird weiter vorgeschlagen, dass im Falle der Chromierungs-Alitierungsschicht der Cr-Gehalt höher als der Al-Gehalt ist. Durch diese Einstellung der Anteile von Al und Cr wird ein genügend großer Widerstand gegen die durch Wärmespannung induzierte Rissbildung erzielt.

Weiter ist es bevorzugt, dass im Falle der Chromierungs-Alitierungsschicht der Al-Gehalt weniger als 20 Gew.-% beträgt, vorzugsweise weniger als 15 Gew.-%, weiter vorzugsweise höchstens 10 Gew.-%. Die Untergrenze für den Al-Gehalt bei der Chromierungs-Alitierungsschicht liegt vorzugsweise bei mindestens 5 Gew.-%, weiter vorzugsweise bei mindestens 10 Gew.-%.

Erfindungsgemäß wird weiter ein Verfahren zum Beschichten eines Strömungselements für ein Flugtriebwerk vorgeschlagen, wobei das Strömungselement einen Grundwerkstoff aufweist, wobei in einem ersten Verfahrensschritt ein vollständiges Beschichten des Grundwerkstoffs des Strömungselements mit einer Chromierungsschicht erfolgt, in einem zweiten Verfahrensschritt ein teilweises Beschichten der Chromierungsschicht mit einer Haftschicht erfolgt und in einem dritten Verfahrensschritt ein vollständiges Beschichten der Chromierungsschicht sowie der Haftschicht mit einer Alitierungsschicht erfolgt.

Es wird weiter vorgeschlagen, dass in einem vierten Verfahrensschritt ein teilweises Beschichten mit einer Wärmedämmschicht erfolgt.

Es ist bevorzugt, dass das Beschichten des zweiten Verfahrensschrittes und des vierten Verfahrensschrittes auf gleichen Teilbereichen erfolgt. Es wird damit sichergestellt, dass die Haftschicht an den Stellen vorgesehen ist, an denen die Wärmedämmschicht vorgesehen ist.

Weiter hat es sich als vorteilhaft erwiesen, wenn der erste Verfahrensschritt durch eine chemische Gasphasenabscheidung erfolgt und/oder der zweite Verfahrensschritt durch thermisches Spritzen erfolgt und/oder der dritte Verfahrensschritt durch eine chemische Gasphasenabscheidung erfolgt. Vorzugsweise erfolgt der vierte Verfahrensschritt durch thermisches Spritzen oder durch eine physikalische Gasphasenabscheidung mittels Elektronenstrahl.

Die Erfindung wird im Folgenden anhand bevorzugter Ausführungsformen unter Bezugnahme auf die beigefügte Figur erläutert. Dabei zeigt:

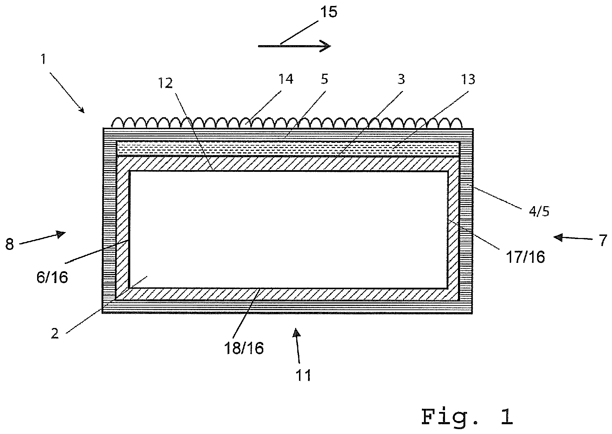

- Fig. 1: eine Schnittansicht eines erfindungsgemäßen Strömungselements.

Fig. 1 zeigt eine Ausführungsform eines erfindungsgemäßen Strömungselements 1 in einer Schnittansicht. Das Strömungselement 1 bildet vorzugsweise ein Brennkammerelement eines Brennraums eines Flugtriebwerks, weiter vorzugsweise ein Brennkammerkachelelement. Der Kern des erfindungsgemäßen Strömungselements 1 ist durch einen Grundwerkstoff 2 gebildet. Als Material für den Grundwerkstoff 2 kommen beispielsweise Nickel- und Kobalt-Basis-Superlegierungen infrage.

Ist das Strömungselement 1 durch ein Brennkammerkachelelement gebildet, so wird dies im montierten Zustand mit einem Metallgehäuse verschraubt und schützt dieses vor den bei dem Verbrennungsprozess freigesetzten Temperaturen, die in einem heißen Gasstrom 15 an dem Strömungselement 1 vorbeiströmen.

Der Gasstrom 15 der Verbrennungsgase ist in Fig. 1 mit einem Pfeil gekennzeichnet, wobei die Strömungsrichtung des Gasstroms 15 durch die Pfeilrichtung angezeigt wird.

Die Grundform des Strömungselements 1 ist vorzugsweise quaderförmig, wobei auch andere Geometrien möglich sind. Im eingebauten Zustand unterscheidet man zwischen einer dem Gasstrom 15 zugewandten Heißgasfläche 12 und einer dem Gasstrom 12 abgewandten Fläche 16, wobei die abgewandte Fläche 16 vorzugsweise fünf Seitenflächen umfasst: eine der Strömungsrichtung des Gasstroms 15 entgegengerichtete erste Seitenfläche 6, die eine Eintrittskante 8 bildet; eine in Strömungsrichtung zeigende zweite Seitenfläche 17, die eine Austrittskante 7 bildet; eine gegenüber der dem Gasstrom 15 zugewandten Heißgasfläche 12 angeordnete dritte Seitenfläche 18, die eine Rückseite 11 bildet; und zwei parallel zu der Schnittebene von Fig. 1 liegende Seitenflächen, die als Seitenkanten bezeichnet werden.

An der Rückseite 11 des Strömungselements 1 können vorzugsweise orthogonal zu der dritten Teilfläche 18 stehende Stifte, auch Pins genannt, vorgesehen sein, die zur Erhöhung der Oberfläche an der Rückseite 11 dienen. Somit kann die Wärmeabgabe an einen Kühlluftmassenstrom, der zwischen dem Metallgehäuse und der Rückseite 11 strömt, verbessert werden. Unter einer Beschichtung der Rückseite 11 ist auch die Beschichtung der dritten herausragenden Stifte - sofern vorhanden - zu verstehen.

Bei der in Fig. 1 dargestellten Ausführungsform der Erfindung ist der Grundwerkstoff 2 vorzugsweise an allen Seiten von einer Chromierungsschicht 3 umgeben.

In ersten Teilbereichen ist auf die Chromierungsschicht 3 eine Haftschicht 13 aufgebracht, wobei es sich dabei vorzugsweise um eine MCrAlY-Schicht handelt. Weiter ist die Haftschicht 13 in dem ersten Teilbereich durch eine Alitierungsschicht 5 überdeckt. Als abschließende Schicht in den ersten Teilbereichen ist eine Wärmedämmschicht 14 auf der Alitierungsschicht 5 aufgebracht, die im Betrieb durch den Gasstrom 15 umströmt wird.

Die ersten Teilbereiche sind dabei vorzugsweise durch eine thermisch hochbelastete Fläche des Strömungselements 1 gebildet, weiter vorzugsweise durch die Heißgasfläche 12.

Die Wärmedämmschicht 14 ist vorzugsweise eine keramische Wärmedämmschicht aus Zirkonoxid (ZrO₂). Es sei jedoch darauf hingewiesen, dass anstelle einer keramischen Wärmedämmschicht 14 auch eine Wärmedämmschicht 14 mit anderer chemischer Zusammensetzung verwendet werden kann. Die vorzugsweise keramische Wärmedämmschicht 14 wird bevorzugt durch thermisches Spritzen oder durch physikalische Gasphasenabscheidung mit Elektronenstrahl aufgebracht.

In einem zweiten Teilbereich, der keine Haftschicht 13 aufweist, ist auf der Chromierungsschicht 3 eine Alitierungsschicht 5 vorgesehen, wobei die Chromierungsschicht 3 und die Alitierungsschicht 5 zusammen eine Chromierungs-Alitierungsschicht 4 bilden. Vorzugsweise sind die zweiten Teilbereiche durch die abgewandte Fläche 16 gebildet.

Die Haftschicht 10 ist nicht unmittelbar mit dem Grundwerkstoff 2 verbunden, sondern sie verbindet die Alitierungsschicht 5 mit der Chromierungsschicht 3. Bei einer Beschädigung der Wärmedämmschicht 14, beispielsweise durch thermische Beanspruchung, kann der Grundwerkstoff 2 immer noch durch den vorteilhaften Verbund von Alitierungsschicht 5, Haftschicht 13 und Chromierungsschicht 3 geschützt werden.

Sulfatinduzierte Korrosion tritt bei den Brennkammerkachelelementen 1 hauptsächlich an der Austrittskante 7 auf. Durch die Beschichtung der Austrittskante 7 mit der Chromierungs-Alitierungsschicht 4 kann dieses Problem behoben und somit die Lebensdauer des Strömungselements 1 verlängert werden.

Die Alitierung bietet grundsätzlich einen Schutz gegen Oxidation, die bei hohen Temperaturen auftritt; die Chromierung hingegen schützt vor Heißgaskorrosion, die bei niedrigen Temperaturen auftritt. Das Grundprinzip der beschriebenen Ausführungsbeispiele besteht darin, dass die abgewandte Fläche 16, insbesondere die Eintrittskante 8 und die Austrittskante 7, durch die Kombination zu der Chromierungs-/Alitierungsschicht 4 das Strömungselement 1 sowohl vor Oxidation als auch vor Korrosion geschützt werden kann. Das Strömungselement 1 kann so in einem im Vergleich zu konventionellen Strömungselementen 1 vergrößerten Temperaturbereich von ca. 750°C bis 1200°C zuverlässig geschützt werden.

Im Bereich der kombinierten Chromierungs-Alitierungsschicht 4 ist es vorteilhaft, den Cr-Gehalt in Gew.-% höher als den Al-Gehalt einzustellen. Der Al-Gehalt beträgt dabei vorzugsweise weniger als 20 Gew.-%, weiter vorzugsweise weniger als 15 Gew.-% und insbesondere vorzugsweise weniger als 10 Gew.-%.

In einem besonders bevorzugten Ausführungsbeispiel wird in einem ersten Verfahrensschritt die Chromierungsschicht 3 vollständig, d.h. auf allen Flächen, auf den Grundwerkstoff 2 des Strömungselements 1, vorzugsweise durch eine chemische Gasphasenabscheidung, aufgebracht.

In einem zweiten Verfahrensschritt wird nach dem Chromieren vorzugsweise in einem ersten Teilbereich, der der Heißgasfläche 12 zugeordnet ist, eine Haftschicht 13 aufgebracht. Bei der Haftschicht 13 handelt es sich vorzugsweise um eine MCrAlY-Schicht. Vorzugsweise erfolgt das Auftragen der Haftschicht 13 durch thermisches Spritzen.

In einem dritten Verfahrensschritt erfolgt vorzugsweise eine vollständige Alitierung des Strömungselements 1, d.h. sowohl an der Heißgasfläche 12 als auch an der abgewandten Fläche 16. Weiter vorzugsweise erfolgt die Alitierung durch chemische Gasphasenabscheidung. An der abgewandten Fläche 16 wird somit die Chromierungs-Alitierungsschicht 4 gebildet.

Anschließend wird in einem vierten Verfahrensschritt vorzugsweise an der Heißgasfläche 12 die Wärmedämmschicht 14 aufgebracht. Bevorzugt erfolgt dies durch thermisches Spritzen oder physikalische Gasphasenabscheidung mit Elektronenstrahl.

## Patentansprüche

1. Strömungselement (1) für den strömungstechnischen Kontakt mit einem heißen Gasstrom (15) innerhalb eines Flugtriebwerks, wobei
- das Strömungselement (1) einen Grundwerkstoff (2) umfasst, der eine Heißgasfläche (12), welche dem Gasstrom (15) zugewandt ist, und einer abgewandten Fläche (16), welche dem Gasstrom (15) abgewandt ist, aufweist, **dadurch gekennzeichnet, dass**
- der Grundwerkstoff (2) an der Heißgasfläche (12) und an der abgewandten Fläche (16) vollständig von einer Chromierungsschicht (3) umgeben ist, wobei
- das Strömungselement (1) auf der Chromierungsschicht (3) in ersten Teilbereichen eine Haftschicht (13) aufweist, wobei
- das Strömungselement (1) eine Alitierungsschicht (5) aufweist, wobei
- die Alitierungsschicht (5) in den ersten Teilbereichen auf der Haftschicht (13) angeordnet ist, wobei
- in den ersten Teilbereichen eine Wärmedämmschicht (14) auf der Alitierungsschicht (5) angeordnet ist, und
- die Alitierungsschicht (5) in den zweiten Teilbereichen, welche keine Haftschicht (13) aufweisen, auf der Chromierungsschicht (3) angeordnet ist, wobei die Chromierungsschicht (3) und die Alitierungsschicht (5) in diesen zweiten Teilbereichen eine Chromierungs-Alitierungsschicht (4) bilden.

2. Strömungselement (1) nach Anspruch 1, **dadurch gekennzeichnet, dass** die ersten Teilbereiche der Heißgasfläche (12) zugeordnet sind.

3. Strömungselement (1) nach einem der vorangehenden Ansprüche, **dadurch gekennzeichnet, dass** im Falle der Chromierungs-Alitierungsschicht (4) der Cr-Gehalt höher als der Al-Gehalt ist.

4. Strömungselement (1) nach einem der vorangehenden Ansprüche, **dadurch gekennzeichnet, dass** im Falle der Chromierungs-Alitierungsschicht (4) der Al-Gehalt weniger als 20 Gew.-% beträgt.

5. Verfahren zum Beschichten eines Strömungselements (1) für ein Flugtriebwerk, wobei das Strömungselement (1) einen Grundwerkstoff (2) aufweist, **dadurch gekennzeichnet, dass**
- in einem ersten Verfahrensschritt ein vollständiges Beschichten des Grundwerkstoffs (2) des Strömungselements (1) mit einer Chromierungsschicht (3) erfolgt,
- in einem zweiten Verfahrensschritt ein teilweises Beschichten der Chromierungsschicht (3) mit einer Haftschicht (13) erfolgt,
- in einem dritten Verfahrensschritt ein vollständiges Beschichten der Chromierungsschicht (3) und der Haftschicht (13) mit einer Alitierungsschicht (5) erfolgt.

6. Verfahren nach Anspruch 5, **dadurch gekennzeichnet, dass** in einem vierten Verfahrensschritt ein teilweises Beschichten mit einer Wärmedämmschicht (14) erfolgt.

7. Verfahren nach Anspruch 6, **dadurch gekennzeichnet, dass** das Beschichten des zweiten Verfahrensschritts und des vierten Verfahrensschritts auf gleichen Teilbereichen erfolgt.

8. Verfahren nach einem der Ansprüche 5 bis 7, **dadurch gekennzeichnet, dass** der erste Verfahrensschritt durch eine chemische Gasphasenabscheidung erfolgt.

9. Verfahren nach einem der Ansprüche 5 bis 8, **dadurch gekennzeichnet, dass** der zweite Verfahrensschritt durch thermisches Spritzen erfolgt.

10. Verfahren nach einem der Ansprüche 5 bis 9, **dadurch gekennzeichnet, dass** der dritte Verfahrensschritt durch eine chemische Gasphasenabscheidung erfolgt.

11. Verfahren nach einem der Ansprüche 6 bis 10, **dadurch gekennzeichnet, dass** der vierte Verfahrensschritt durch thermisches Spritzen oder durch eine physikalische Gasphasenabscheidung mittels Elektronenstrahl vorgenommen wird.

## Claims

1. Flow element (1) for fluidic contact with a hot gas flow (15) inside an aircraft engine,
- the flow element (1) comprising a base material (2) that comprises a hot gas surface (12) that faces the gas flow (15), and a remote surface (16) that is remote from the gas flow (15), **characterised in that**
- the base material (2) is completely surrounded by a chroming layer (3) on the hot gas surface (12) and on the remote surface (16),
- the flow element (1) comprising an adhesive layer (13) on the chroming layer (3) in first portions,
- the flow element (1) comprising an alitising layer (5),
- the alitising layer (5) being arranged on the adhesive layer (13) in the first portions,
- a thermal barrier layer (14) being arranged on the alitising layer (5) in the first portions, and
- the alitising layer (5) being arranged on the chroming layer (3) in the second portions that do not comprise an adhesive layer (13), the chroming layer (3) and the alitising layer (5) forming a chroming-alitising layer (4) in said second portions.

2. Flow element (1) according to claim 1, **characterised in that** the first portions are assigned to the hot gas surface (12).

3. Flow element (1) according to any of the preceding claims, **characterised in that**, in the case of the chroming-alitising layer (4), the Cr content is higher than the AI content.

4. Flow element (1) according to any of the preceding claims, **characterised in that**, in the case of the chroming-alitising layer (4), the AI content is less than 20 wt.%.

5. Method for coating a flow element (1) for an aircraft engine, the flow element (1) comprising a base material (2), **characterised in that**,
- in a first method step, the base material (2) of the flow element (1) is completely coated with a chroming layer (3),
- in a second method step, the chroming layer (3) is coated in part with an adhesive layer (13),
- in a third method step, the chroming layer (3) and the adhesive layer (13) are completely coated with an alitising layer (5).

6. Method according to claim 5, **characterised in that**, in a fourth method step, partial coating with a thermal barrier layer (14) is carried out.

7. Method according to claim 6, **characterised in that** the coating of the second method step and of the fourth method step is carried out in the same portions.

8. Method according to any of claims 5 to 7, **characterised in that** the first method step is carried out by means of chemical vapour deposition.

9. Method according to any of claims 5 to 8, **characterised in that** the second method step is carried out by means of thermal spraying.

10. Method according to any of claims 5 to 9, **characterised in that** the third method step is carried out by means of chemical vapour deposition.

11. Method according to any of claims 6 to 10, **characterised in that** the fourth method step is carried out by means of thermal spraying or by means of physical vapour deposition using an electron beam.

## Revendications

1. Élément exposé à un écoulement (1) pour le contact fluidique avec un flux de gaz chaud (15) au sein d'un moteur d'avion, dans lequel
- l'élément exposé à un écoulement (1) comprend un matériau de base (2), lequel comporte une surface de gaz chaud (12) faisant face au flux de gaz (15) et une surface détournée (16) se détournant du flux du gaz (15), **caractérisé en ce que**
- le matériau de base (2) est entièrement entouré par une couche de chromage (3) sur la surface de gaz chaud (12) et sur la surface détournée (16), dans lequel
- l'élément exposé à un écoulement (1) comporte une couche d'adhésion (13) dans des premières zones partielles sur la couche de chromage (3), dans lequel
- l'élément exposé à un écoulement (1) comporte une couche d'aluminisation (5), dans lequel
- la couche d'aluminisation (5) est agencée dans les premières zones partielles sur la couche de chromage (3), dans lequel
- dans les premières zones partielles, une couche calorifuge (14) est agencée sur la couche d'aluminisation (5), et
- dans les deuxièmes zones partielles ne comportant pas de couche d'adhésion (13), la couche d'aluminisation (5) est agencée sur la couche de chromage (3), dans laquelle la couche de chromage (3) et la couche d'aluminisation (5) forment dans ces deuxièmes zones partielles une couche de chromage-aluminisation (4).

2. Élément exposé à un écoulement (1) selon la revendication 1, **caractérisé en ce que** les premières zones partielles sont ordonnées à la surface de gaz chaud (12).

3. Élément exposé à un écoulement (1) selon l'une des revendications précédentes, **caractérisé en ce que** dans le cas de la couche de chromage-aluminisation (4) le contenu en chrome est supérieur au contenu en aluminium.

4. Élément exposé à un écoulement (1) selon l'une des revendications précédentes, **caractérisé en ce que** dans le cas de la couche de chromage-aluminisation (4) le contenu en aluminium est inférieur à 20 % (m/m).

5. Procédé de revêtement d'un élément exposé à un écoulement (1) pour un moteur d'avion, dans lequel l'élément exposé à un écoulement (1) comporte un matériau de base (2), **caractérisé en ce que**
- dans une première étape de procédé, un revêtement total du matériau de base (2) de l'élément exposé à un écoulement (1) est effectué avec une couche de chromage (3),
- dans une deuxième étape de procédé, un revêtement partiel de la couche de chromage (3) est effectué avec une couche d'adhésion (13),
- dans une troisième étape de procédé, un revêtement total de la couche de chromage (3) et de la couche d'adhésion (13) est effectué avec une couche d'aluminisation (5).

6. Procédé selon la revendication 5, **caractérisé en ce que** dans une quatrième étape de procédé un revêtement partiel est effectué avec une couche calorifuge (14).

7. Procédé selon la revendication 6, **caractérisé en ce que** le revêtement de la deuxième étape de procédé et de la quatrième étape de procédé s'effectue sur les mêmes zones partielles.

8. Procédé selon l'une des revendications 5 à 7, **caractérisé en ce que** la première étape de procédé s'effectue par dépôt chimique en phase vapeur.

9. Procédé selon l'une des revendications 5 à 8, **caractérisé en ce que** la deuxième étape de procédé s'effectue par pulvérisation thermique.

10. Procédé selon l'une des revendications 5 à 9, **caractérisé en ce que** la troisième étape de procédé s'effectue par dépôt chimique en phase vapeur.

11. Procédé selon l'une des revendications 6 à 10, **caractérisé en ce que** la quatrième étape de procédé est obtenue par pulvérisation thermique ou par dépôt physique en phase vapeur au moyen d'un faisceau d'électrons.
